Europäisches Patentamt

European Patent Office

Office européen des brevets

(19)

(11) Veröffentlichungsnummer: **0 079 879**
**B1**

(12) # EUROPÄISCHE PATENTSCHRIFT

(45) Veröffentlichungstag der Patentschrift:
10.04.85

(51) Int. Cl.⁴: **F 16 H 3/08**

(21) Anmeldenummer: **82890156.1**

(22) Anmeldetag: **27.10.82**

(54) **Lastschaltgetriebe.**

(30) Priorität: **28.10.81 AT 4583/81**

(43) Veröffentlichungstag der Anmeldung:
**25.05.83 Patentblatt 83/21**

(45) Bekanntmachung des Hinweises auf die Patenterteilung:
**10.04.85 Patentblatt 85/15**

(84) Benannte Vertragsstaaten:
**BE CH DE FR GB IT LI LU NL SE**

(56) Entgegenhaltungen:
**EP - A - 0 019 609**
**CS - B - 74 083**
**DE - C - 682 747**
**DE - C - 710 333**
**FR - A - 950 121**

**J. LOOMAN: "Zahnradgetriebe", Springer Verlag Berlin
1970, S. 100, 101, 104, 105**

(73) Patentinhaber: **EVG Entwicklungs- u. Verwertungs-
Gesellschaft m.b.H., Vinzenz-Muchitsch-Strasse 36,
A-8011 Graz (AT)**

(72) Erfinder: **Gött, Hans, Dipl.-Ing., Petersbergenstrasse 69,
A-8042 Graz (AT)**
Erfinder: **Ritter, Josef, Dr. Dipl.-Ing., Stenggstrasse 33,
A-8043 Graz (AT)**
Erfinder: **Ritter, Gerhard, Dr. Dipl.-Ing., Unterer
Plattenweg 47, A-8043 Graz (AT)**
Erfinder: **Ritter, Klaus, Dipl.-Ing., Peterstalstrasse 157,
A-8042 Graz (AT)**

(74) Vertreter: **Schütz, Alfred, Dipl.-Ing. Dr. techn. Dipl.-Ing.
Dr. techn. Alfred Schütz Dipl.-Ing. Dr. techn. Rudolf
Pfeifer et al, Dr. phil. Engelbert Mrazek Dipl.-Ing. Walter
Holzer Dipl.-Ing. Otto Pfeifer Fleischmanngasse 9,
A-1040 Wien (AT)**

## Beschreibung

Die Erfindung betrifft ein Lastschaltgetriebe mit zwei Paaren aufeinander eingefluchteter, koaxialer und mittels einer Steuerung in axialer Richtung relativ zueinander verschiebbarer Wellen, an deren einander zugekehrten Enden je eine Kupplungsscheibe angeordnet ist, und die mittels eines zwischen den beiden Paaren von Kupplungsscheiben frei verschiebbar und drehbar gelagerten Kupplungskörpers in verschiedenen Kombinationen kuppelbar sind, wobei an den einander abgekehrten Enden der Wellen Zahnräder angeordnet sind.

Ein Getriebe dieser Gattung ist aus der EP-A1 Nr. 0019609 bekannt. Bei dem bekannten Getriebe befinden sich die mittels einer Steuerung relativ verschiebbaren und über den zentralen Kupplungskörper in verschiedenen Kombinationen kuppelbaren Wellen in einem Vorgelege, das über Zahnräder mit der Antriebs- und der Abtriebswelle des Getriebes in Verbindung steht, wobei die Antriebs- und die Abtriebswelle in einer Flucht angeordnet sind und an gegenüberliegenden Seiten aus dem Getriebegehäuse herausragen. Ein derartig aufgebautes Getriebe eignet sich für alle jene Verwendungsfälle, bei welchen eine Anordnung des Getriebes im Raum zwischen dem Motor und den von diesem angetriebenen Elementen zweckmässig ist.

Es sind ferner Getriebe für vorderradgetriebene Fahrzeuge mit vorne liegendem Motor in verschiedenen Ausführungsformen bekannt und beispielsweise in dem Buch „Zahnradgetriebe" von J. Looman (Springer-Verlag 1970) beschrieben. Insbesondere ist dort auch ein Getriebe beschrieben, bei welchem die Antriebswelle vor dem Getriebe durch einen Freilauf geteilt ist, so dass das Fahrzeug beispielsweise mit leer laufendem Motor, etwa vor Kreuzungen, an die Kreuzung heranrollen gelassen werden kann, ohne dass dabei aber der Motor wegen des Freilaufes auf das Fahrzeug eine Bremswirkung ausüben könnte. Bei dem bekannten Getriebe werden jedoch in jedem Betriebszustand, ob Freilauf oder motorischer Antrieb, sämtliche Getriebeelemente mit durch die Übersetzungsverhältnisse der kämmenden Zahnräder festgelegter Rotationsgeschwindigkeit mitbewegt.

Aufgabe der Erfindung ist es, ein Getriebe der angegebenen Gattung derart auszubilden, dass der Motor und die von ihm angetriebenen Elemente auf der gleichen Seite des Getriebes angeordnet werden können, wie dies beispielsweise bei Fahrzeugen erforderlich ist, bei welchen sich die angetriebenen Räder in unmittelbarer Nachbarschaft des Motors befinden, etwa bei Wagen mit Vorderradantrieb und vorne liegendem Motor; zugleich soll dieses Getriebe so ausgebildet werden, dass abtriebsseitig von jenen Zahnradpaaren, die in dauerndem Eingriff stehen, um das Getriebe auch unter Last schalten zu können, nur jene angetrieben werden, über welche in einem gegebenen Schaltzustand die Kraft von der Antriebs- auf die Abtriebswelle übertragen wird.

Die Lösung der Erfindungsaufgabe besteht darin, dass das erste Paar koaxialer Wellen aus einem über den Kupplungskörper hinaus verlängerten Abschnitt einer Antriebswelle und einer diesen Abschnitt konzentrisch umgebenden Hohlwelle gebildet ist, wobei diese beiden Wellen über je ein Zahnrad und ein Vorgelege in einem fest vorgegebenen Übersetzungsverhältnis miteinander verbunden sind, dass ferner das zweite Paar koaxialer Wellen aus zwei vor dem Kupplungskörper angeordneten, die Antriebswelle konzentrisch umgebenden Wellen gebildet ist, wobei jede dieser Wellen über ein Zahnrad mit einem mit einer Abtriebswelle gekuppelten oder kuppelbaren Zahnrad in je einem fest vorgegebenen Übersetzungsverhältnis verbunden ist, und dass zwischen jedem Abtriebswellen-Zahnrad und der Abtriebswelle ein Freilauf vorgesehen ist, mittels dessen die Abtriebswelle nur im Sinne einer Vorwärtsdrehung antreibbar ist.

Ein solches Getriebe zeichnet sich durch besonders geringe innere Widerstände aus, weil sich bei dieser Ausgestaltung jeweils nur jene mit der Abtriebswelle über Zahnräder verbundene Hohlwelle in Bewegung befindet, die im betrachteten Augenblick der Kraftübertragung zwischen dem frei verschiebbar und drehbar gelagerten Kupplungskörper und der Abtriebswelle dient, wogegen die Verbindung der zweiten mit der Abtriebswelle über Zahnräder gekuppelten Hohlwelle mit der Abtriebswelle durch den dieser Hohlwelle zugeordneten Freilauf unterbrochen wird, so dass die zweite Hohlwelle nicht von der Abtriebswelle leerlaufend mitbewegt wird.

Allerdings ist die Möglichkeit, die Treibverbindung zwischen der Abtriebswelle und der mit ihr über Zahnräder verbundenen Hohlwelle durch einen Freilauf unterbrechen zu können, gelegentlich auch von Nachteil, und zwar dann, wenn beispielsweise bei einem talwärts fahrenden Fahrzeug der Motor zum Bremsen herangezogen werden soll. Wenn aber jedem Freilauf eine ein- und ausrückbare, den Freilauf überbrückende Reibungskupplung zugeordnet ist, kann der Freilauf, wann immer dies gewünscht wird, zeitweilig unwirksam gemacht werden.

Bei bestimmungsgemässer Verwendung des Getriebes im Kraftübertragungsweg eines Fahrzeugantriebes wird dieses vorteilhaft so ausgebildet, dass zwischen der Abtriebswelle und dem einen mit dieser kuppelbaren Zahnrad eine gegenüber der Abtriebswelle frei drehbare Hohlwelle vorgesehen ist und dass ferner eine ein- und ausrückbare, vorzugsweise formschlüssige Kupplung vorgesehen ist, die wahlweise mit dieser Hohlwelle oder einem Zahnrad kuppelbar ist, das über ein die Drehrichtung umkehrendes Vorgelege angetrieben wird, um ein Reversieren des Fahrzeuges zu ermöglichen.

Schliesslich ist es bei einem Kraftfahrzeuggetriebe nach der Erfindung zweckmässig, eine Rücklaufsperre vorzusehen, um das Fahrzeug beim Parken auf geneigter Strasse gegen Abrollen sichern zu können.

Anhand eines Ausführungsbeispieles wird nun die Erfindung unter Bezugnahme auf die Zeichnungen näher beschrieben. Es zeigen:

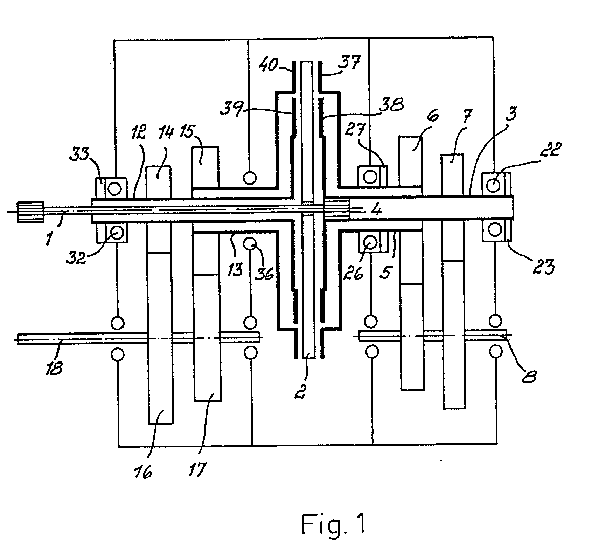

Fig. 1 den prinzipiellen Aufbau eines Getriebes nach der Erfindung, und

Fig. 2 eine Ausgestaltung als Getriebe für ein Fahrzeug mit im Motorbereich angeordneten Treibrädern.

Auf einer Antriebswelle 1 ist ein gegenüber dieser Antriebswelle frei verschiebbar und verdrehbar gelagerter Kupplungskörper 2 angeordnet. Die Antriebswelle 1 weist einen über den Kupplungskörper 2 hinaus verlängerten Abschnitt 3 auf. Mittels einer Verzahnung 4 ist der Abschnitt 3 mit der übrigen Antriebswelle 1 formschlüssig verbunden, um das Getriebe ggf. an dieser Stelle zerlegen zu können und damit die Kupplungsbeläge leicht zugänglich zu machen, so dass das Auswechseln abgenutzter Kupplungsbeläge gegen neue möglich ist.

Eine Hohlwelle 5 umgibt den Abschnitt 3 der Antriebswelle 1 koaxial. Die Hohlwelle 5 trägt an einem Ende ein Zahnrad 6, und ebenso trägt der Abschnitt 3 der Antriebswelle 1 nahe seinem äusseren Ende ein Zahnrad 7. Die beiden Zahnräder 6 und 7 stehen mit Zahnrädern eines Vorgeleges 8 in Eingriff, so dass die beiden koaxialen Wellen 3, 5 in einem fest vorgegebenen Übersetzungsverhältnis miteinander verbunden sind.

Zwei weitere Hohlwellen 12, 13 umgeben die Antriebswelle 1 koaxial. Jede dieser Hohlwellen 12, 13 ist mit einem Zahnrad 14, 15 versehen. Die Zahnräder 14, 15 stehen mit zwei weiteren Zahnrädern 16, 17 in Eingriff, die auf der Abtriebswelle 18 gelagert und mit dieser gekuppelt oder kuppelbar sind.

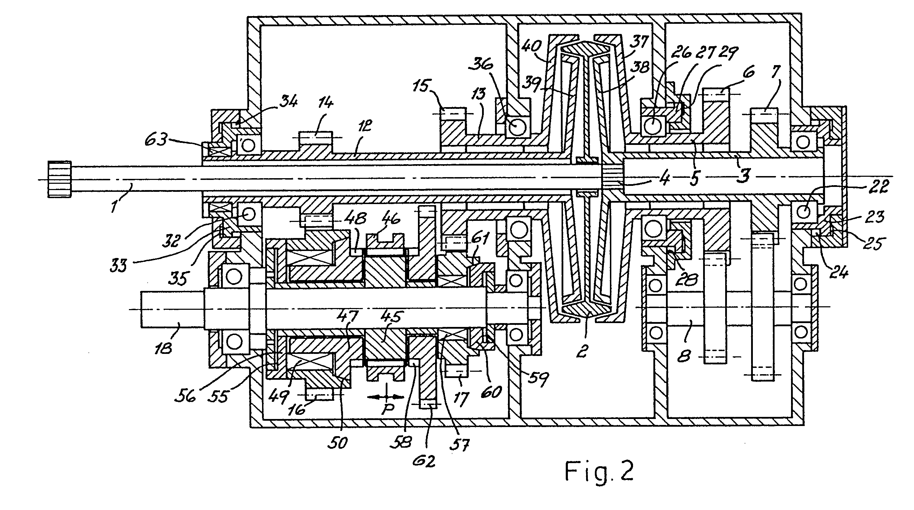

Bei dem gezeigten Ausführungsbeispiel ist der Abschnitt 3 der Antriebswelle 1 im Kupplungsgehäuse verschiebbar gelagert. Zu diesem Zweck stützt sich das Lager 22 gegen einen kreisringförmigen Kolben 23 ab. Der Kolben 23 bildet die Trennwand zwischen zwei nur in Fig. 2 dargestellten kreisringförmigen Kammern 24, 25, wobei die die Kammer 25 begrenzende Kolbenfläche grösser als die die Kammer 24 begrenzende Fläche des Kolbens 23 ist.

Die Kammern 24 und 25 werden über nicht dargestellte Druckmittelleitungen mit Druckmittel versorgt, wobei die Konstruktion derart ausgebildet ist, dass die Kammer 24 dauernd mit unter Druck stehendem Druckmittel gefüllt bleibt, wogegen in der Kammer 25 der Druck je nach Wunsch aufgebaut oder wieder auf Null reduziert werden kann. Bei gleichzeitiger Beaufschlagung beider Kammern 24 und 25 mit Druckmittel schiebt der Kolben 23 das Lager 22 und mit diesem den Abschnitt 3 der Antriebswelle 1 in Richtung zum Kupplungskörper 2. Sobald der Druck in der Kammer 25 wieder abgebaut wird, kehrt der Abschnitt 3 der Antriebswelle 1 unter der Wirkung des Druckes in der Kammer 24 wieder in seine ursprüngliche Lage zurück.

In genau gleicher Weise ist die Hohlwelle 5 in einem Lager 26 und die Hohlwelle 12 in einem Lager 32 gelagert. Diese Lager sind gleichfalls durch Kolben 27 und 33 verschiebbar, wobei jedem Kolben wiederum gemäss Fig. 2 zwei ringförmige Kammern 28 bzw. 34 und 29 bzw. 35 zugeordnet sind. Die Kammern 24, 28 und 34 bzw. 25, 29 und 35 entsprechen einander in ihrer Wirkungsweise. Lediglich die Hohlwelle 13 ist in einem unverschiebbaren Lager 36 gelagert.

An ihren dem Kupplungskörper 2 zugekehrten Enden tragen die Hohlwellen 5, 12, 13 und der Abschnitt 3 der Antriebswelle 1 je einen Kupplungskörper, der mit dem Kupplungskörper 2 kraftschlüssig kuppelbar ist. So trägt die Hohlwelle 5 den Kupplungskörper 37, der Abschnitt 3 der Antriebswelle 1 den Kupplungskörper 38, die Hohlwelle 12 den Kupplungskörper 39 und schliesslich die Hohlwelle 13 den Kupplungskörper 40.

Es ändert sich nichts am Wesen der Erfindung, wenn an Stelle der im Ausführungsbeispiel unverschiebbar gelagerten Welle 13 beispielsweise der Abschnitt 3 der Antriebswelle 1 oder die Hohlwelle 5 unverschiebbar und dafür die Hohlwelle 13 verschiebbar gelagert wäre. Wesentlich ist in jedem Falle lediglich, dass die Kolbenquerschnittsfläche der ringförmigen Kammern 25, 29 oder 35, welche die ihnen zugeordneten Wellen in die Eingriffsstellung mit dem zentralen Kupplungskörper 2 verschieben, bei jener Welle, die koaxial mit der feststehenden Welle angeordnet ist, grösser ist als die Kolbenquerschnittsfläche in jeder der beiden anderen ringförmigen Kammern, um sicherzustellen, dass bei Beaufschlagung je einer ringförmigen Kammer auf jeder Seite des zentralen Kupplungskörpers 2 dieser Kupplungskörper 2 mit Sicherheit von dem feststehenden Kupplungskörper weggeschoben wird und nicht ungewollt mit dem feststehenden Kupplungskörper in kraftschlüssige Verbindung geraten kann.

Im dargestellten Ausführungsbeispiel ist der Kupplungskörper 40 an der unverschiebbar gelagerten Hohlwelle 13 angeordnet und somit im Getriebegehäuse feststehend. Demnach muss die Kolbenquerschnittsfläche in der ringförmigen Kammer 35, die im Ausführungsbeispiel der mit der feststehenden Hohlwelle 13 koaxialen Hohlwelle 12 zugeordnet ist, grösser sein als die Kolbenquerschnittsfläche in jeder der ringförmigen Kammern 25 bzw. 29, so dass bei gleichzeitiger Druckmittelbeaufschlagung der Kammer 35 und einer der Kammern 25 oder 29 der zentrale Kupplungskörper 2 vom feststehenden Kupplungskörper 40 weggeschoben wird und nicht ungewollt mit diesem in kraftschlüssige Verbindung geraten kann.

Im Ausführungsbeispiel nach Fig. 2 ist ein Rad 45 starr mit der Abtriebswelle 18 verbunden. Dieses Rad weist eine nur angedeutete Aussenverzahnung auf, die mit der Innenverzahnung eines das Rad umschliessenden Schaltringes 46 formschlüssig verbunden ist. Der Schaltring 46 ist durch nicht dargestellte Schaltmittel im Sinne des Doppelpfeiles P verschiebbar.

Eine die Abtriebswelle 18 umgebende, gegenüber der Abtriebswelle 18 frei drehbar gelagerte Hohlwelle 47 trägt eine Aussenverzahnung 48, die mit der Innenverzahnung des Schaltringes 46 formschlüssig verbindbar ist, wenn der Schaltring 46 zur Hohlwelle 47 hin verschoben wird. Die Hohlwelle 47 ist dann auch mit dem Rad 45 formschlüssig verbunden und kann somit die Abtriebswelle 18 bei einer Drehbewegung mitnehmen.

Zwischen der Hohlwelle 47 und dem diese Hohlwelle umschliessenden Zahnrad 16 ist ein Freilauf 49 angeordnet. Der Freilauf 49 ist so ausgebildet, dass er die Hohlwelle 47 nur dann auf Drehung mitnimmt, wenn sich das Zahnrad 16 relativ zur Hohlwelle 47 im Sinne einer Vorwärtsdrehung der Abtriebswelle 18 bewegt.

Um den Freilauf 49, wenn notwendig, auch überbrücken und dadurch unwirksam machen zu können, sind am Zahnrad 16 und an der Hohlwelle 47 zusammenwirkende Reibungskupplungsflächen 50 ausgebildet.

Das Zahnrad 16 ist bezüglich der Hohlwelle 47 gegen die Wirkung nicht dargestellter Rückstellfedern um einen geringen Betrag axial verschiebbar. Die Verschiebung erfolgt durch Füllen einer ringförmigen Kammer 55 mit Druckmedium, wobei der als Zylinder 56 ausgebildete Teil, der die Kammer 55 teilweise begrenzt, unter Mitnahme des Zahnrades 16 gegen die Kupplungsflächen 50 hin bewegt wird.

Die Kraftübertragung über das Zahnrad 17 ist in sehr ähnlicher Weise ausgebildet; der Freilauf 57 verbindet in diesem Fall allerdings das Zahnrad 17 unmittelbar mit der Abtriebswelle 18. Wiederum ist eine mit Druckmedium füllbare Kammer 59 vorgesehen, deren in Axialrichtung der Abtriebswelle 18 verschiebbarer Zylinder 60 Kupplungsflächen 61 aufweist, die mit komplementären Kupplungsflächen am Zahnrad 17 zusammenwirken können, um den Freilauf 57 bei Bedarf überbrücken zu können. Der Zylinder 60 ist zu diesem Zweck drehfest mit der Abtriebswelle 18 verbunden.

Ein Zahnrad 62 steht über ein nicht dargestelltes Vorgelege mit dem Zahnrad 14 in Verbindung. Das auf der Abtriebswelle 18 frei drehbar gelagerte Zahnrad 62 dreht sich daher stets im Sinne einer Rückwärtsdrehung der Abtriebswelle 18 und kann über eine Aussenverzahnung 58 formschlüssig mit dem Schaltring 46 und daher auch mit dem Rad 45 und der Abtriebswelle 18 verbunden werden.

Schliesslich kann die Hohlwelle 12 noch durch eine Rücklaufsperre 63 gegen Rückwärtsdrehung gesichert sein. Damit wird es möglich, ein Fahrzeug auf abschüssigem Gelände durch geeignete Einstellung des Schaltringes 46 gegen Wegrollen zu sichern.

Der Kraftfluss im Getriebe geht über folgende Elemente:

Vorwärtsgänge:

1. Gang: 1-4-3-7-8-6-5-37-2-39-12-14-16-49-47-48-46-45-18 (16-50-47-48)

2. Gang: 1-4-3-7-8-6-5-37-2-40-13-15-17-57-18 (17-61-60-18)

3. Gang: 1-4-3-38-2-39-12-14-16-49-47-48-46-45-18 (16-50-47-48)

4. Gang: 1-4-3-38-2-40-13-15-17-57-18 (17-61-60-18)

Die eingeklammerten Werte geben jeweils die die Freiläufe überbrückenden Wege an.

Rückwärtsgänge:

1. Gang: 1-4-3-7-8-6-5-37-2-39-14-Vorgelege-62-58-46-45-18

2. Gang: 1-4-3-38-2-39-14-Vorgelege-62-58-46-45-18

Bei dem im Zuge der Kraftübertragung der Rückwärtsgänge erwähnten Vorgelege handelt es sich jeweils um jenes nicht dargestellte Vorgelege zwischen den Rädern 14 und 62, durch welches dem Zahnrad 62 eine Drehung entgegengesetzt der Vorwärtsdrehrichtung der Abtriebswelle 18 erteilt wird.

**Patentansprüche**

1. Lastschaltgetriebe mit zwei Paaren aufeinander eingefluchteter, koaxialer und mittels einer Steuerung in axialer Richtung relativ zueinander verschiebbarer Wellen (3, 5; 12, 13), an deren einander zugekehrten Enden je eine Kupplungsscheibe (38, 37; 39, 40) angeordnet ist und die mittels eines zwischen den beiden Paaren von Kupplungsscheiben frei verschiebbar und drehbar gelagerten Kupplungskörpers (2) in verschiedenen Kombinationen kuppelbar sind, wobei an den einander abgekehrten Enden der Wellen (3, 5; 12, 13) Zahnräder (6, 7; 14, 15) angeordnet sind, dadurch gekennzeichnet, dass das erste Paar koaxialer Wellen aus einem über den Kupplungskörper (2) hinaus verlängerten Abschnitt (3) einer Antriebswelle (1) und einer diesen Abschnitt (3) konzentrisch umgebenden Hohlwelle (5) gebildet ist, wobei diese beiden Wellen (3, 5) über je ein Zahnrad (7, 6) und ein Vorgelege (8) in einem fest vorgegebenen Übersetzungsverhältnis miteinander verbunden sind, dass ferner das zweite Paar koaxialer Wellen aus zwei vor dem Kupplungskörper (2) angeordneten, die Antriebswelle (1) konzentrisch umgebenden Wellen (12, 13) gebildet ist, wobei jede dieser Wellen (12, 13) über ein Zahnrad (14, 15) mit einem mit einer Abtriebswelle (18) gekuppelten oder kuppelbaren Zahnrad (16, 17) in je einem fest vorgegebenen Übersetzungsverhältnis verbunden ist, und dass zwischen jedem Abtriebswellen-Zahnrad (16, 17) und der Abtriebswelle (18) ein Freilauf (49, 57) vorgesehen ist, mittels dessen die Abtriebswelle (18) nur im Sinne einer Vorwärtsdrehung antreibbar ist.

2. Lastschaltgetriebe nach Anspruch 1, dadurch gekennzeichnet, dass jedem Freilauf (49, 57) eine ein- und ausrückbare, den Freilauf überbrückende Reibungskupplung (50, 61) zugeordnet ist.

3. Lastschaltgetriebe nach einem der Ansprüche 1 oder 2, dadurch gekennzeichnet, dass zwischen der Abtriebswelle (18) und dem einen der mit dieser kuppelbaren Zahnräder (16) eine gegenüber der Abtriebswelle (18) frei drehbare Hohlwelle (47) vorgesehen ist, und dass ferner eine ein- und ausrückbare, vorzugsweise formschlüssige Kupplung (46) vorgesehen ist, die die Abtriebswelle (18) wahlweise mit dieser Hohlwelle (47) oder einem Zahnrad (62) kuppelt, das über ein die Drehrichtung umkehrendes Vorgelege angetrieben wird.

4. Lastschaltgetriebe nach einem der Ansprüche 1 bis 3, dadurch gekennzeichnet, dass an einer der Getriebewellen eine Rücklaufsperre (63) vorgesehen ist.

## Claims

1. Load-shiftable power transmission with two pairs of coaxial shafts (3, 5; 12, 13) aligned relative to each other and shiftable relative to each other in axial direction by way of a control, where in each case a clutch disk (38, 37; 39, 40) is disposed at the ends of the shafts facing each other and the shafts are adapted to be coupled in various combinations *via* a clutch body (2) supported freely shiftable and rotatable between the two pairs of clutch disks, and where gear wheels (6, 7; 14, 15) are arranged at the ends of the shafts (3, 5; 12, 13) turned away from each other, characterized in that the first pair of coaxial shafts is formed by an extension (3) of a drive shaft (1) extended beyond the clutch body (2) and by a hollow shaft (5) concentrically surrounding this extension (3), where these two coaxial shafts (3, 5) are connected to each other *via* in each case a gear wheel (7, 6) and an idler gearing (8) at a fixed predetermined transmission ratio, and that the second pair of coaxial shafts is formed from two shafts (12, 13) coaxially surrounding the drive shaft (1) and disposed ahead of the clutch body (2), where each of these shafts (12, 13) is connected to a gear wheel (16, 17) coupled or adapted for coupling to the driven shaft (18) *via* a gear wheel (14, 15) at a fixed predetermined transmission ratio, and in that a free-wheel assembly (49, 57) is provided between the driven shaft (18) and each gear wheel (16, 17) of the driven shaft, by way of which free-wheel assembly the driven shaft (18) can only be driven in the direction of a forward rotation.

2. Power transmission according to Claim 1, characterized in that an engageable and disengageable friction clutch (50, 61) is coordinated to each free-wheel assembly (49, 57) bridging the free-wheel assembly.

3. Power transmission according to Claim 1 or 2, characterized in that a hollow shaft (47) freely rotatable versus the driven shaft (18) is provided between the driven shaft (18) and one of the gear wheels (16) adapted to couple to the driven shaft (18), and that further an engageable and disengageable, preferably positive locking clutch (46) is provided, which as selected couples the driven shaft (18) with this hollow shaft (47) or with a gear wheel (62), which is driven *via* an idler gearing reversing the direction of rotation.

4. Power transmission according to one of the Claims 1 to 3, characterized in that a backstop (63) is provided on one of the gear shafts.

## Revendications

1. Mécanisme de transmission pouvant être manœuvré en charge, comprenant deux paires d'arbres (3, 5; 12, 13) en alignement mutuel, coaxiaux et pouvant être déplacés les uns par rapport aux autres en direction axiale au moyen d'une commande, des disques d'accouplement respectifs (38, 37; 39, 40) qui peuvent être accouplés selon diverses combinaisons au moyen d'un corps d'accouplement (2) monté de façon à pouvoir se déplacer et tourner librement entre les deux paires de disques d'accouplement étant disposés à leurs extrémités tournées les unes vers les autres, des roues dentées (6, 7; 14, 15) étant montées sur les extrémités des arbres (3, 5; 12, 13) qui sont à l'opposé les unes des autres, caractérisé en ce que la première paire d'arbres coaxiaux est constituée par une section (3) d'un arbre d'entraînement (1) se prolongeant au-delà du corps d'accouplement (2) et par un arbre creux (5) entourant concentriquement cette section (3), les deux arbres (3, 5) étant reliés l'un à l'autre selon un rapport de démultiplication prédéterminé et fixe par l'intermédiaire d'une roue dentée respective (7, 6) et d'une transmission intermédiaire (8), en ce qu'en outre la seconde paire d'arbres coaxiaux est constituée par deux arbres (12, 13) entourant concentriquement l'arbre d'entraînement (1) et disposés à l'avant du corps d'accouplement (2), chacun de ces deux arbres (12, 13) étant relié selon un rapport de démultiplication prédéterminé et fixe par l'intermédiaire d'une roue dentée (14, 15) à une roue dentée (16, 17) accouplée ou pouvant être accouplée à un arbre de sortie (18), et en ce qu'entre chaque roue dentée (16, 17) de l'arbre de sortie et cet arbre de sortie (18) est prévue une roue libre (49, 57) au moyen de laquelle l'arbre de sortie (18) ne peut être entraîné qu'en rotation vers l'avant.

2. Mécanisme de transmission manœuvrable en charge selon la revendication 1, caractérisé en ce qu'à chaque roue libre (49, 57) est associé un accouplement à friction (50, 61), pouvant être engagé et dégagé, qui est superposé à la roue libre.

3. Mécanisme de transmission manœuvrable en charge selon l'une des revendications 1 ou 2, caractérisé en ce qu'on prévoit, entre l'arbre de sortie (18) et l'une des roues dentées (16) pouvant être accouplée à ce dernier, un arbre creux (47) pouvant tourner librement par rapport à l'arbre de sortie et en ce qu'on prévoit en outre un accouplement (46) pouvant être engagé et dégagé, de préférence de forme concordante, qui accouple au choix l'arbre de sortie (18) avec cet arbre creux (47) ou avec une roue dentée (62) qui est entraînée par une transmission intermédiaire inversant le sens de la rotation.

4. Mécanisme de transmission manœuvrable en charge selon l'une des revendications 1 à 3, caractérisé en ce qu'un dispositif de blocage de marche arrière (63) est prévu sur l'un des arbres du mécanisme.

Fig. 1

Fig. 2

0 079 879